# FASCICULE DE BREVET EUROPEEN

(11) **EP 1 389 423 B1**
(45) Date de publication et mention de la délivrance du brevet: **28.06.2006**
(21) Numéro de dépôt: 02362014.9
(22) Date de dépôt: 05.08.2002
(51) Int. Cl.: A01N 25/12, A01N 41/04, A01N 47/22, A01N 47/24, A01N 35/02

(54) **Procédé de production d'appât anti-limaces et appât ainsi obtenu**
Verfahren zur Herstellung eines Schneckenköders und entsprechend erhaltenen Köder
Process for preparing an anti-slug bait and thus obtained bait

(43) Date de publication de la demande: 18.02.2004
(73) Titulaire: Ets Jouffray Drillaud, 86170 Cisse (FR)
(72) Inventeur: Sapin, Joel, 86280 Saint Benoit (FR)
(74) Mandataire: Thébault, Jean-Louis

(56) Documents cités:
- WO-A-00/11948
- WO-A-97/26789
- US-A- 6 001 382

## Description

La présente invention se rapporte à la fabrication d'un appât anti-limaces.

Les appâts anti-limaces actuellement utilisés présentent deux inconvénients majeurs constitués par une tenue dans le temps médiocre et une efficacité limitée. Ces deux inconvénients qui sont liés l'un à l'autre résultent d'une résistance physico-chimique des appâts, généralement formés de petits bâtonnets, très sensible au temps et à l'humidité en particulier la pluie, qui désagrègent rapidement les bâtonnets et réduisent l'efficacité des principes actifs.

Le document WO-0011948 divulgue un processus d'élaboration d'un nouveau matériel d'appât sous forme de pastilles ayant des surfaces relativement lisses. Selon le document, la rugosité des surfaces est la cause de la faible résistance physique de l'appât. Aussi le processus a pour objectif de résoudre le problème de décomposition de l'appât habituellement sous forme de bâtonnets en éliminant la rugosité des surfaces

L'invention vise précisément à pallier ces inconvénients en proposant des appâts anti-limaces d'une texture beaucoup plus résistante notamment aux intempéries et incorporant une matière active de plus grande stabilité chimique et d'efficacité meilleure et plus durable.

A cet effet, l'invention a pour objet un procédé de production d'appâts anti-limace caractérisé en ce qu'il consiste :
- à mélanger les ingrédients constitués d'un support amylacé, d'un agent de dispersion, d'un ou plusieurs conservateurs et d'un principe actif molluscicide, dans un turbo-mélangeur ou analogue dont la vitesse est réglée en sorte de porter le mélange à une température, comprise entre 50 et 100°C,
- à transférer au fur et à mesure le mélange du turbo-mélangeur ou analogue dans une extrudeuse à vis ou analogue définissant successivement une zone d'alimentation à température contrôlée et teneur en eau ajustée, une zone de mélange et de plastification de la matière et une zone de montée en compression dans laquelle ladite matière est comprimée et à une température contrôlée comprise entre 60 et 110 C°, le temps de séjour de la matière dans l'extrudeuse étant de l'ordre de quelques secondes,
- à extruder la matière via une filière, sous forme de granules,
- puis à effectuer les opérations finales de refroidissement et tamisage desdits granules, le refroidissement étant éventuellement précédé d'un séchage.

Un tel procédé permet de préserver le principe actif dans la zone réactionnelle, c'est-à-dire à l'intérieur de l'extrudeuse, du fait à la fois du court séjour des ingrédients du mélange, et du contrôle de la teneur en eau et de la température atteinte.

Il s'ensuit des propriétés et caractéristiques tout à fait avantageuses du produit final, à savoir : une vitesse de diffusion importante du principe actif jusqu'au coeur de la matrice amylacée, une meilleure homogénéisation du principe actif, un recuit de la pâte gélifiée provoquant une induration du produit final qui lui assure une meilleure durabilité et une vaporisation totale ou partielle de l'eau résiduelle en sortie de filière engendrant la formation de micropores et évitant pour les températures de travail les plus élevées une étape ultérieure de séchage.

Il est par ailleurs possible en utilisant une filière directement en sortie de l'extrudeuse et en réglant cette filière de manière appropriée, d'obtenir en sortie des granules de forme sensiblement sphérique assimilable à des graines et de densité variable à la demande.

Le procédé de l'invention permet ainsi d'obtenir des produits de texture conservée en phase, du fait de sa cohésion et assurant une efficacité optimale des principes actifs.

L'invention a également pour objet les appâts anti-limaces obtenus conformément au procédé.

D'autres caractéristiques et avantages du procédé ressortiront de la description qui va suivre des modes de mise en oeuvre, description donnée à titre d'exemple uniquement et en regard des dessins annexés sur lesquels :
- la figure 1 est un schéma illustrant les étapes du procédé de l'invention et,
- la figure 2 est une vue schématique en coupe de l'extrudeuse de l'installation de la figure 1.

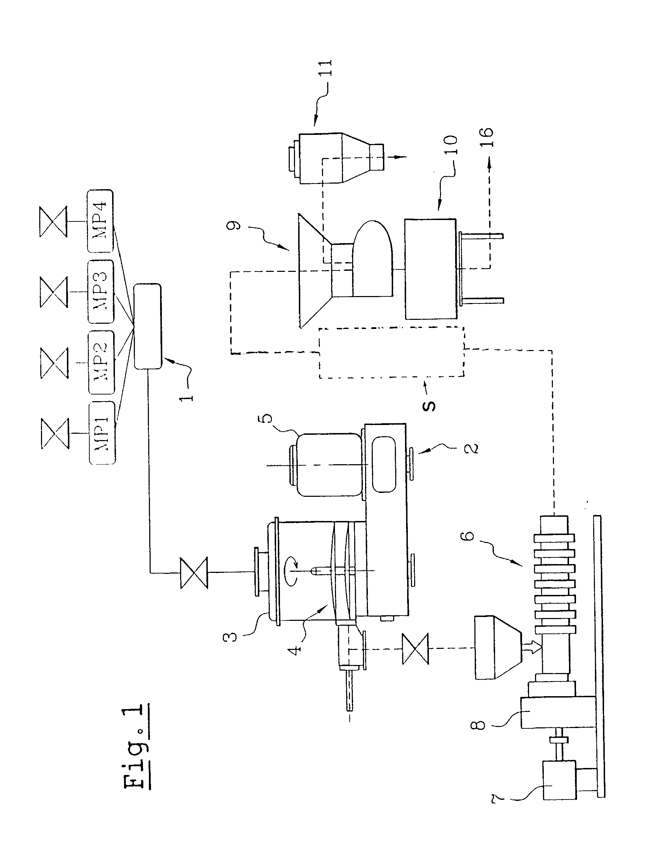

Sur la figure 1, on a représenté en 1 un système de pesage des divers ingrédients ou matières premières MP1, MP2, MP3, MP4, etc.... qui doivent être mélangés pour l'obtention du produit désiré.

Ces ingrédients sont acheminés de préférence l'un après l'autre et suivant un ordre déterminé, en quantités déterminées dans un turbo-mélangeur 2 ou analogue comprenant une enceinte 3 de mélange, un système rotatif à pales 4 et un moteur électrique 5.

En sortie du turbo-mélangeur 2, le mélange est envoyé directement à l'extrémité amont d'une extrudeuse ou analogue 6, par exemple une extrudeuse à double vis corotative, entraînée en rotation à partir d'un ensemble moto-réducteur 7-8.

En sortie d'extrudeuse 6, le produit subit éventuellement un séchage à 60°C en S puis un refroidissement en 9, puis un tamisage en 10. En 11 est schématisé un cyclone d'évacuation des fines.

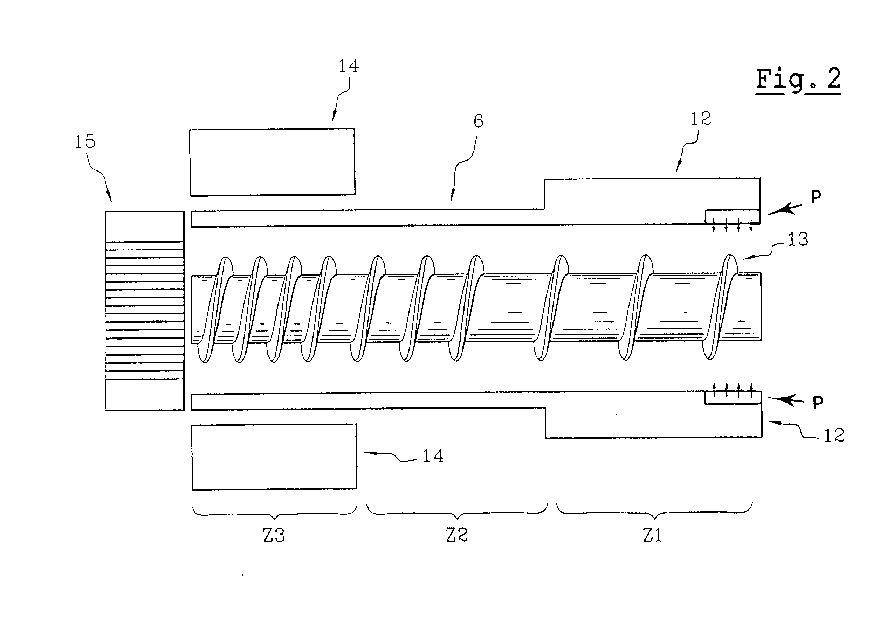

La figure 2 est une coupe axiale schématisée de l'extrudeuse de la figure 1.

Dans sa partie amont, l'extrudeuse 6 définit une zone Z₁ dite de transport à laquelle est associé un dispositif de contrôle de température 12 qui est en fait une jaquette formée par une double enveloppe dans laquelle circule un fluide (par exemple de l'eau) thermorégulé à une température comprise entre 50 et 100°C.

En outre, la zone Z₁ est munie d'une pompe doseuse schématisée en P et permettant une injection contrôlée d'eau dans la zone Z₁ afin d'ajuster la teneur en eau à la valeur désirée.

La zone Z₁ est suivie d'une zone intermédiaire Z₂ dite de mélange et de plastification dans laquelle s'opère aussi une montée en pression de la matière acheminée par les vis 13 qui présentent, à cet effet, un pas plus serré dans la zone Z₂ que dans la zone Z₁.

Dans la zone Z₃ de montée en compression, les vis 13 présentent un pas encore plus serré et le carter de l'extrudeuse est entouré d'un fourreau de chauffage symbolisé en 14. La pression exercée sur la matière est ici maximale ainsi que la température qui croît depuis la zone Z₁ jusque dans la zone Z₃. A la sortie de l'extrudeuse 6 est accolée une filière symbolisée en 15.

Les ingrédients ou matières premières (MP1, MP2, MP3, MP4, etc. ...) nécessaires à la préparation d'un appât selon l'invention sont :
- un support amylacé constitué par exemple d'une ou plusieurs farines céréalières ou oléoprotéagineuses, telles que farine de blé dur, de blé tendre, d'orge, de maïs, de sorgho, ou d'amidons provenant de plantes céréalières ou oléoprotéagineuses, tels qu'amidon de blé, de maïs, de pomme de terre,
- un liant destiné à améliorer la tenue du produit final 16 qui se présente sous forme de granules sous forme sphérique à la manière de graines agricoles ou, plus traditionnellement ; sous forme de bâtonnets. Le liant peut être du son de blé, des phosphoprotéines du lait ou une ou plusieurs matières grasses d'origine animale ou végétale.
- un agent d'appétence tel que de la levure par exemple.
- un agent de dispersion pour favoriser la dispersion des différents additifs au sein de la matrice amylacée, tel que l'un ou plusieurs des tensio-actifs utilisés couramment à cet effet en alimentation animale et humaine.
- et un principe actif molluscicide choisi dans le groupe des molluscicides connus tels que les produits connus sous les noms de Bensultap, Mathiocarb, Thiodicarbe, etc.... ou simplement du métaldehyde.

D'autres additifs peuvent éventuellement être prévus, tels qu'un agent répulsif pour éloigner par exemple les animaux domestiques, un anti-fongique pour stopper le développement de moisissures sur les appâts, un ou plusieurs colorants pour conférer au produit 16 par exemple une couleur bleue permettant de distinguer les granulés pour ainsi mieux contrôler la densité au sol des granulés et rendre ces derniers moins repérables par les oiseaux.

Lors du mélange des ingrédients dans le turbo-mélangeur, du fait de la grande vitesse de rotation des pales 4, on obtient une très bonne dispersion desdits additifs au sein de la matrice amylacée et on porte la matière à une température contrôlée comprise entre 50 et 100°C. Une telle augmentation de température se fait sans apport calorique extérieur et résulte de la seule vitesse de déplacement des particules qui crée de multiples collisions qui, par effet de friction, provoquent un dégagement de chaleur.

Au sortir du turbo-mélangeur 2, le mélange est envoyé directement dans l'extrudeuse 6 où il est maintenu, dans la zone Z₁, à sa température d'entrée, c'est-à-dire comprise entre 50 et 100°C, grâce au dispositif 12.

Le séjour de la matière à l'intérieur de l'extrudeuse 6 est court, de l'ordre de quelques secondes, par exemple 60 secondes, et au cours de son transit à l'intérieur de l'extrudeuse, la matière va subir une compression progressive et un échauffement qui va porter la matière dans la zone Z₃ à une température régulée dont la valeur est comprise entre 60 et 110°C. Le fourreau de chauffage 14 est en service essentiellement au démarrage de l'extrudeuse.

La teneur en eau du mélange introduit dans l'extrudeuse 6 est ajustée à l'entrée dans la zone Z₁, grâce à la pompe P, dans une plage comprise entre 10 % et 70 % en masse d'eau par rapport à la masse de matière sèche.

Le contrôle de la teneur en eau associé à celui de la température à l'intérieur de l'extrudeuse permet d'obtenir des produits de densités différentes.

En associant une forte teneur en eau, par exemple supérieure à 35 % et une température relativement faible, par exemple inférieure à 80° C dans l'extrudeuse, on obtient un produit de densité élevée, supérieure à 1.

Au contraire, en associant une faible teneur en eau, inférieure à 35 % et une température élevée, entre 80° C et 110° C, on obtient un produit de densité faible.

Avec des températures relativement faibles, il s'opère ainsi dans l'extrudeuse 6 une gélification des amidons dans des conditions de température et de durée telles que l'on obtient une vitesse de diffusion importante des additifs jusque dans le coeur de la matrice amylacée, une excellente homogénéisation du principe actif, un recuit de la pâte gélifiée plus ou moins accentué suivant les températures mises en jeu, provoquant une induration assurant une meilleure durabilité du produit fini 16 et une vaporisation au sortir du produit de la filière 15 d'une partie, voire de la totalité, de l'eau résiduelle contenue dans ledit produit. La vaporisation engendre également la formation de micropores et d'une structure alvéolaire.

Pour les températures de travail les plus élevées, le produit est nettement plus sec et ne nécessite pas d'étape ultérieure de séchage.

La maîtrise de la vaporisation par l'ajustement de la teneur en eau et de la température permet ainsi de conférer au produit une masse volumique apparente à la demande.

Le produit obtenu conformément au procédé présente une excellente cohésion procurant une très bonne tenue dans le temps, ainsi qu'une efficacité optimale du principe actif et de très longue durée. Le produit est en outre très résistant à l'humidité, notamment à la pluie.

Divers essais de stabilité du principe actif d'appâts selon l'invention conservés dans différentes ambiances et à des températures différentes ont révélé une très bonne stabilité du principe actif (Bensultap) dans les granulés (16).

De même, des tests d'hydrolyse dans l'eau dudit principe actif n'ont révélé qu'une infime variation dans le temps de la teneur du principe actif.

Les proportions en pourcentage en poids du total du mélange effectué dans le turbo-mélangeur 2 des divers ingrédients sont, à titre d'exemple :
- support amylacé : environ 80 %,
- liant : environ 10 %,
- principe actif : environ 5 %,
- le reste étant constitué des additifs d'appétence, de répulsion, de dispersion, de conservation de coloration, etc. ... aux doses habituelles.

A titre illustratif, on va donner, ci-après, deux exemples d'appât anti-limaces obtenus conformément au procédé de l'invention.

### Exemple 1 :

Le mélange donné à titre d'exemple ci-dessus a été homogénéisé au turbomélangeur 2, puis ayant atteint la température de 90°C a été introduit dans la zone Z₁ d'une extrudeuse double vis corotative 6. La température de cette zone Z₁ était régulée à 86°C. La teneur en eau du mélange, définie par le rapport de la masse d'eau sur la masse de matière sèche, a été ajustée à 25 %. La température de la zone Z₂ était de 94°C, celle de la zone Z₃ de 104°C. La teneur en eau en sortie d'extrudeuse était de 9% et l'étape de séchage n'a donc pas été opérée.

Les caractéristiques du produit étaient :
Force maximale avant rupture : 15N.
Densité : 0,40

### Exemple 2:

Le même mélange que dans l'exemple 1 a été homogénéisé au turbometangeur 2, puis ayant atteint la température de 60°C a été introduit dans la zone Z₁ d'une extrudeuse double vis corotative 6. La température de cette zone Z₁ était régulée à 60°C. La teneur en eau du mélange définie par le rapport de la masse d'eau sur la masse de matière sèche a été ajustée à 50 %. La température de la zone Z₂ était de 60°C, celle de la zone Z₃ de 65°C. La teneur en eau en sortie d'extrudeuse était de 29% et une étape de séchage du produit a été opérée à 60°C dans un dispositif S constitué d'une étuve à air pulsé.

Les caractéristiques du produit étaient :
Force maximale avant rupture : 28,8 N
Densité : 1,08

## Revendications

1. Procédé de production d'appâts anti-limaces **caractérisé en ce qu'**il consiste:
- à mélanger les ingrédients (MP1, MP2, MP3, MP4) constitués d'un support amylacé, d'un agent de dispersion, d'un ou plusieurs conservateurs et d'un principe actif molluscicide, dans un turbo-mélangeur ou analogue (2) dont la vitesse est réglée en sorte de porter le mélange à une température contrôlée comprise entre 50 et 100°C.
- à transférer au fur et à mesure le mélange du turbo-mélangeur (2) ou analogue dans une extrudeuse à vis ou analogue (6) définissant successivement une zone (Z₁) d'alimentation à température contrôlée et teneur en eau ajustée, une zone (Z₂) de mélange et de plastification de la matière et une zone (Z₃) dite de montée en compression dans laquelle ladite matière est comprimée et à une température contrôlée comprise entre 60°C et 110°C, le temps de séjour de la matière dans l'extrudeuse étant de l'ordre de quelques secondes,
- à extruder la matière via une filière, sous forme de granules (16),
- puis à effectuer les opérations finales de refroidissement et tamisage desdits granules, le refroidissement étant éventuellement précédé d'un séchage.

2. Procédé suivant la revendication 1, **caractérisé en ce que** le temps de séjour de la matière dans l'extrudeuse est de soixante secondes environ.

3. Procédé suivant la revendication 1 ou 2, **caractérisé en ce que** la teneur en eau dans la zone (Z₁) de l'extrudeuse est ajustée dans une plage comprise entre 10 % et 70 % en masse d'eau par rapport à la masse de matière sèche.

4. Procédé suivant la revendication 3, **caractérisé en qu'**en vue d'obtenir un produit à densité faible, dans l'extrudeuse les températures sont ajustées à une valeur élevée supérieure à 80° C et la teneur en eau dans la zone (Z₁) est ajustée à une valeur faible inférieure à 35 %.

5. Procédé suivant la revendication 3 **caractérisé en ce qu'**en vue d'obtenir un produit à densité élevée, dans l'extrudeuse les températures sont ajustées à une valeur faible inférieure à 80° C et la teneur en eau dans la zone (Z₁) est ajustée à une valeur forte supérieure à 35 %.

6. Procédé suivant la revendication 4, **caractérisé par** les paramètres ou étapes suivants :
- mélange des ingrédients porté à une température de 90°C ;
- mélange porté à 86°C dans la zone Z1 de l'extrudeuse et teneur en eau ajustée à 25 % ;
- température dans la zone Z2 de l'extrudeuse : 94°C ;
- température dans la zone Z3 de l'extrudeuse : 104°C ;
- teneur en eau en sortie d'extrudeuse : 9%.

7. Procédé suivant la revendication 5, **caractérisé par** les paramètres ou étapes suivants :
- mélange des ingrédients porté à une température de 60°C ;
- mélange maintenu à la température de 60°C dans la zone Z1 de l'extrudeuse et teneur en eau ajustée à 50% ;
- température dans la zone Z2 de l'extrudeuse : 60°C ;
- température dans la zone Z3 de l'extrudeuse : 65°C ;
- teneur en eau en sortie d'extrudeuse 29% ;
- séchage par air pulsé à 60°C avant refroidissement.

8. Procédé suivant l'une des revendications 1 à 7, **caractérisé en ce que** le support amylacé est constitué d'une ou plusieurs farines céréalières ou oléoprotéagineuses, telles que farine de blé dur, de blé tendre, d'orge, de maïs, de sorgho, ou d'amidons provenant de plantes céréalières ou oléoprotéagineuses, tels qu'amidon de blé, de maïs, de pomme de terre,

9. Procédé suivant l'une des revendications 1 à 8, **caractérisé en ce que** le principe actif est choisi dans le groupe comprenant le Bensultap, le Mathiocarb, le Thiodicarb, le métaldhyde.

10. Procédé suivant l'une des revendications 1 à 9, **caractérisé en ce que** le liant est choisi dans le groupe comprenant le son de blé, les phosphoprotéines du lait et les matières grasses d'origine animale ou végétale.

11. Procédé suivant l'une des revendications 1 à 10, **caractérisé en ce que** le mélange comprend en outre des additifs de répulsion, anti-fongiques, de coloration.

12. Appât anti-limaces susceptible d'être obtenu conformément au procédé selon l'une quelconque des revendications 1 à 11, comportant une induration.

13. Appât anti-limaces susceptible d'être obtenu conformément au procédé selon les revendications 4 ou 6, présentant une force maximale avant rupture de 15 N et une densité de 0,40.

14. Appât anti-limaces susceptible d'être obtenu conformément au procédé selon les revendications 5 ou 7, présentant une force maximale avant rupture de 28,8 N et une densité de 1,08.

15. Appât anti-limaces selon l'une quelconque des revendications 12 à 14, **caractérisé en ce que** qu'il se présente sous la forme de granules sensiblement sphériques.

16. Appât anti-limaces selon l'une quelconque des revendications 12 à 15, **caractérisé en ce qu'**il comporte des microspores.

## Claims

1. A method of producing slug bait, **characterised in that** it comprises:
- mixing the ingredients (MP1, MP2, MP3, MP4) constituting a starchy support, a dispersion agent, one or several preservatives and a molluscicide active principle, in a turbomixer or the like (2), the speed of which is regulated so as to bring the mixture to a controlled temperature of between 50° and 100°C,
- progressively transferring the mixture from the turbomixer (2) or the like into a screw extruder or the like (6) defining successively a supply zone (Z1) at a controlled temperature and an adjusted water content, a zone (Z2) for mixing and plasticising the material and a so-called compression rise zone (Z3) in which the said material is compressed, at a controlled temperature of between 60°C and 110°C, the residence time of the material in the extruder being around a few seconds,
- extruding the material via a die, in the form of granules (16),
- then performing the final operations of cooling and sieving said granules, the cooling possibly being preceded by a drying.

2. A method according to claim 1, **characterised in that** the residence time of the material in the extruder is approximately 60 seconds.

3. A method according to claim 1 or 2, **characterised in that** the water content in the zone (Z1) of the extruder is adjusted in a range lying between 10% and 70% by weight of water with respect to the weight of dry material.

4. A method according to claim 3, **characterised in that**, with a view to obtaining a low-density product, in the extruder the temperatures are adjusted to a high value above 80°C and the water content in the zone (Z1) is adjusted to a low value of less than 35%.

5. A method according to claim 3, **characterised in that**, with a view to obtaining a high-density product, in the extruder the temperatures are adjusted to a low value of less than 80°C and the water content in the zone (Z1) is adjusted to a high value above 35%.

6. A method according to claim 4, **characterised by** the following parameters or steps:
- ingredient mixture brought to a temperature of 90°C;
- mixture brought to 86°C in the zone Z1 of the extruder and water content adjusted to 25%;
- temperature in the zone Z2 of the extruder: 94°C;
- temperature in the zone Z3 of the extruder: 104°C;
- water content at the discharge from the extruder: 9%.

7. A method according to claim 5, **characterised by** the following parameters or steps:
- ingredient mixture brought to a temperature of 60°C;
- mixture maintained at a temperature of 60°C in the zone Z1 of the extruder and water content adjusted to 50%;
- temperature in the zone Z2 of the extruder: 60°C;
- temperature in the zone Z3 of the extruder: 65°C;
- water content at the discharge from the extruder: 29%;
- drying by pulsed air at 60°C before cooling.

8. A method according to one of claims 1 to 7, **characterised in that** the starchy support consists of one or more cereal or oleoproteinaceous flours, such as flour from durum wheat, soft wheat, barley, maize or sorghum, or starches coming from cereal or oleoproteinaceous plants, such as wheat, maize or potato starches.

9. A method according to one of claims 1 to 8, **characterised in that** the active principle is chosen from the group comprising Bensultap, Mathiocarb, Thiodicarb and metaldehyde.

10. A method according to one of claims 1 to 9, **characterised in that** the binder is chosen from the group comprising wheat bran, milk phosphoproteins and fatty matter of animal or vegetable origin.

11. A method according to one of claims 1 to 10, **characterised in that** the mixture also comprises repellent, anti-fungal, colouring additives.

12. A slug bait able to be obtained in accordance with the method according to any one of claims 1 to 11, comprising a hardening.

13. A slug bait able to be obtained in accordance with the method according to claims 4 or 6, having a maximum breaking strength of 15 N and a density of 0.40.

14. A slug bait able to be obtained in accordance with the method according to claims 5 or 7, having a maximum breaking strength of 28.8 N and a density of 1.08.

15. A slug bait according to any one of claims 12 to 14, **characterised in that** it is in the form of substantially spherical granules.

16. A slug bait according to any one of claims 12 to 15, **characterised in that** it comprises micropores.

## Patentansprüche

1. Verfahren für die Herstellung von Ködern für die Vernichtung von Nacktschnecken, **dadurch gekennzeichnet, dass** es darin besteht:
- die Ingredienzen (MP1, MP2, MP3, MP4), die aus einem stärkehaltigen Träger, einem Dispersionsmittel, einem oder mehreren Konservierungsstoffen und einem Molluskizid-Wirkstoff gebildet sind, in einem Turbomischer oder dergleichen (2) zu mischen, dessen Geschwindigkeit in der Weise geregelt wird, dass das Gemisch auf einer kontrollierten Temperatur im Bereich von 50 bis 100 °C gehalten wird,
- das Gemisch des Turbomischers (2) oder dergleichen nach und nach in einen Schneckenextruder oder dergleichen (6) zu befördern, der nacheinander eine Versorgungszone (Z1) mit kontrollierter Temperatur und eingestelltem Wassergehalt, eine Zone (Z2) zum Mischen und Plastifizieren des Materials und eine so genannte Druckanstiegszone (Z3), in der das Material komprimiert und auf eine kontrollierte Temperatur im Bereich von 60 °C bis 110 °C gebracht wird, definiert, wobei die Aufenthaltsdauer des Materials in dem Extruder in der Größenordnung von einigen Sekunden liegt,
- das Material durch eine Ziehdüse in Form von Körnern (16) zu extrudieren,
- dann die abschließenden Abkühl- und Siebvorgänge der Körner auszuführen, wobei der Abkühlung eventuell eine Trocknung vorhergeht.

2. Verfahren nach Anspruch 1, **dadurch gekennzeichnet, dass** die Aufenthaltsdauer des Materials in dem Extruder etwa sechzig Sekunden beträgt.

3. Verfahren nach Anspruch 1 oder 2, **dadurch gekennzeichnet, dass** der Wassergehalt in der Zone (Z1) des Extruders auf einen Bereich eingestellt ist, der zwischen 10 % und 70 % Wassermasse in Bezug auf die Trockenmasse liegt.

4. Verfahren nach Anspruch 3, **dadurch gekennzeichnet, dass**, um ein Produkt mit geringer Dichte zu erhalten, in dem Extruder die Temperaturen auf einen hohen Wert oberhalb von 80 °C eingestellt werden und der Wassergehalt in der Zone (Z1) auf einen niedrigen Wert unterhalb von 35 % eingestellt wird.

5. Verfahren nach Anspruch 3, **dadurch gekennzeichnet, dass**, um ein Produkt mit hoher Dichte zu erhalten, in dem Extruder die Temperaturen auf einen niedrigen Wert unterhalb von 80 °C eingestellt werden und der Wassergehalt in der Zone (Z1) auf einen hohen Wert oberhalb von 35 % eingestellt wird.

6. Verfahren nach Anspruch 4, **gekennzeichnet durch** die folgenden Parameter oder Schritte:
- Gemisch der Ingredienzen wird auf einer Temperatur von 90 °C gehalten;
- Gemisch wird in der Zone (Z1) des Extruders auf 86 °C gehalten und der Wassergehalt wird auf 25 % eingestellt;
- die Temperatur in der Zone (Z2) des Extruders beträgt 94 °C;
- die Temperatur in der Zone (Z3) des Extruders beträgt 104 °C;
- der Wassergehalt am Ausgang des Extruders beträgt 9 %.

7. Verfahren nach Anspruch 5, **gekennzeichnet durch** die folgenden Parameter oder Schritte:
- das Gemisch der Ingredienzen wird auf einer Temperatur von 60 °C gehalten;
- das Gemisch wird in der Zone (Z1) des Extruders auf einer Temperatur von 60 °C gehalten und der Wassergehalt wird auf 50 % eingestellt;
- die Temperatur in der Zone (Z2) des Extruders beträgt 60 °C;
- die Temperatur in der Zone (Z3) des Extruders beträgt 65 °C;
- der Wassergehalt am Ausgang des Extruders beträgt 29 %;
- die Trocknung erfolgt vor der Abkühlung **durch** pulsierende Luft mit 60 °C.

8. Verfahren nach einem der Ansprüche 1 bis 7, **dadurch gekennzeichnet, dass** der stärkehaltige Träger aus einem oder mehreren Mehlen von Getreiden oder öl- und proteinhaltigen Pflanzen wie etwa Hartweizenmehl, Weichweizenmehl, Gerstenmehl, Maismehl, Hirsemehl oder Stärkemehl, die von Getreidepflanzen bzw. öl- und proteinhaltigen Pflanzen, etwa Weizenstärke, Maisstärke oder Kartoffelstärke stammen, gebildet ist.

9. Verfahren nach einem der Ansprüche 1 bis 8, **dadurch gekennzeichnet, dass** der Wirkstoff aus der Gruppe gewählt ist, die Bensultap, Methiocarb, Thiodicarb und Methaldehyd umfasst.

10. Verfahren nach einem der Ansprüche 1 bis 9, **dadurch gekennzeichnet, dass** das Bindemittel aus der Gruppe gewählt ist, die Weizenkleie, Milch-Phosphorproteine und Fette tierischen oder pflanzlichen Ursprungs umfasst.

11. Verfahren nach einem der Ansprüche 1 bis 10, **dadurch gekennzeichnet, dass** das Gemisch außerdem Abstoßungs-, Pilzvernichtungs- und Farbstoffadditive umfasst.

12. Köder für die Vernichtung von Nacktschnecken, der mit dem Verfahren nach einem der Ansprüche 1 bis 11 erhalten werden kann und eine Verhärtung enthält.

13. Köder für die Vernichtung von Nacktschnecken, der mit den Verfahren nach den Anspruchen 4 oder 6 erhalten werden kann und eine Bruchgrenze von 15 N und eine Dichte von 0,40 besitzt.

14. Köder für die Vernichtung von Nacktschnecken, der mit den Verfahren nach den Ansprüchen 5 oder 7 erhalten werden kann und eine Bruchgrenze von 28,8 N und eine Dichte von 1,08 besitzt.

15. Köder für die Vernichtung von Nacktschnecken nach einem der Ansprüche 12 bis 14, **dadurch gekennzeichnet, dass** er in Form im Wesentlichen kugelförmiger Körner vorliegt.

16. Köder für die Vernichtung von Nacktschnecken nach einem der Ansprüche 12 bis 15, **dadurch gekennzeichnet, dass** er Mikroporen aufweist.
